# EUROPEAN PATENT SPECIFICATION

(11) **EP 0 753 772 B1**
(45) Date of publication and mention of the grant of the patent: **30.09.1998**
(21) Application number: 96106370.8
(22) Date of filing: 23.04.1996
(51) Int. Cl.: G02B 6/38

(54) **A light waveguide connector**
Lichtwellenleiter-Steckverbindung
Connecteur à guide d'ondes optique

(30) Priority: 14.07.1995 DE 19525739
(43) Date of publication of application: 15.01.1997
(73) Proprietor: FRAMATOME CONNECTORS INTERNATIONAL, 92400 Courbevoie (FR)
(72) Inventor: May, Guntram, 90518 Altdorf (DE); Müller, Steffan, 90469 Nürnberg (DE); Hitz, Jürgen, 09376 Neuoelsnitz (DE)
(74) Representative: Beetz & Partner Patentanwälte

(56) References cited:
- EP-A- 0 677 756
- GB-A- 2 032 130
- US-A- 4 721 358

## Description

This invention relates to a connector for light waveguide cables having an angled cable outlet, preferably but not exclusively to a connector of this kind which also contains modules for electrical contacts.

A connector of this kind comprises a body having one or more chambers for receiving light waveguide connectors. The light waveguide cables connected thereto extend in a curve in the connector so that they are led out of the connector in a direction usually at approximately 90° to the direction of the plug axes. During and after the assembly of the connectors care must be taken to ensure that the minimum radius of curvature of the light waveguide cables is not undershot in order to obviate excessive signal attenuation in the fibres of the light waveguide cable. Care must also be taken to ensure that the light waveguide plugs are engaged with pressure on the optical operative elements (transmitter, receiver) even when the light waveguide cables are pulled. Disengagement of the plugs from the operative elements leads to substantial attenuation losses.

An angled cable outlet connector is known which has a body with chambers for receiving light waveguide plugs, a support element having one or more channels to receive light waveguide cables connected to the light waveguide plugs at an angle to the axis of the light waveguide plugs, and a cover cap adapted to close the channels and retain the plugs in the chambers (see EP-A-0 677 756, which represents prior art according to Article 54(3) EPC, with respect to the designated states ES, FR, GB, IT, NL, SE).

In the assembly of this connector the plugs are introduced in each case with a spiral spring into special compartments, a spacer is placed in each compartment and the cover cap is so displaced over the spacers that the same are locked. No means for reducing the pull on the cables are provided; consequently, pulls on the cable may lead to substantial attenuation losses, for instance, because the plug disengages from the associated operative element or because the connection between the plug and the cable is damaged. Also, due to the large number of components the assembly and dismantling of the connector is difficult; more particularly there is a high probability of small parts being lost.

It is the object of this invention to disclose a rugged light waveguide connector which can be assembled rapidly and simply and which has a reduced number of parts and in which the junction between the plug and the cable is effectively protected against pulling.

According to the invention, therefore, the cover cap is rotatable for closure around an axis and has a pressing element which presses on the plugs near the axis in order to retain the plugs in their chamber. This connector can be closed after the introduction of the cables by the cover cap being pivoted to the body for rotation around the axis, turned until the latching resistance is reached, then latched. The pivoting of the cover cap is such as to ensure that first the plugs are pressed into abutting engagement in their chambers, whereafter action to protect the cables against pulling ensues.

Preferably, an element which is resilient in the axial direction of the plug and which presses the same against an abutment is provided between the pressing element and the plug. This feature ensures that when the cover cap latches in, at most the stressing of the resilient element alters but the plug and cable remain completely stationary.

The pressing element can take the form of a projection engaging in the plug chambers. Conveniently in this case, the pressing element is resiliently deformable perpendicularly to the rotational axis since the chamber wall forms for the pressing element an abutment which deforms the pressing element resiliently during the closing movement and thus ensures that the same cannot press laterally against the cable during the rotation of the cap. This feature prevents damage to the cable during the closing action.

In the case of a connector having a number of light waveguide cables the light waveguide plugs can have generally known encodings ensuring correct association with the respective chambers.

Preferably, the connector is of modular construction and comprises a light waveguide module receiving the chambers of the light waveguide plugs and has one or more extension modules connected laterally to the light waveguide module, at least one of the extension modules having chambers for electrical contact elements.

In this case, to provide a mechanically stable suspension of the cover cap the articulation for the rotation thereof is provided on an extension module connected to that side of the light waveguide module which is remote from the cable outlet direction, and an extension module connected in the latter direction has latching projections which can be engaged with companion facilities of the cap.

To prevent misconnection of the modules, an encoding can be provided for the connection of the discrete module. For example, the support element can have on its underside an encoding bevel ensuring that only one extension module having a recess adapted to the encoding bevel can be connected to the light waveguide module in the cable outlet direction.

Other features and advantages of the invention will become apparent from the following description of a combined light waveguide metal cable connector as an example of a preferred embodiment of the invention, reference being made to the drawings wherein:
Fig. 1 is a side elevation of the connector according to the invention;
Fig. 2 is a cross-section through the cover cap of the connector of Fig. 1;
Fig. 3 is a cross-section through a part of the cover cap;
Fig. 4 shows the body of the connector in a partial section looking towards a light waveguide plug and the associated light waveguide cable;
Fig. 5 shows an intermediate state during the fitting of the cover cap to the body, and
Fig. 6 is a full cross-section of the connector of Fig. 1.

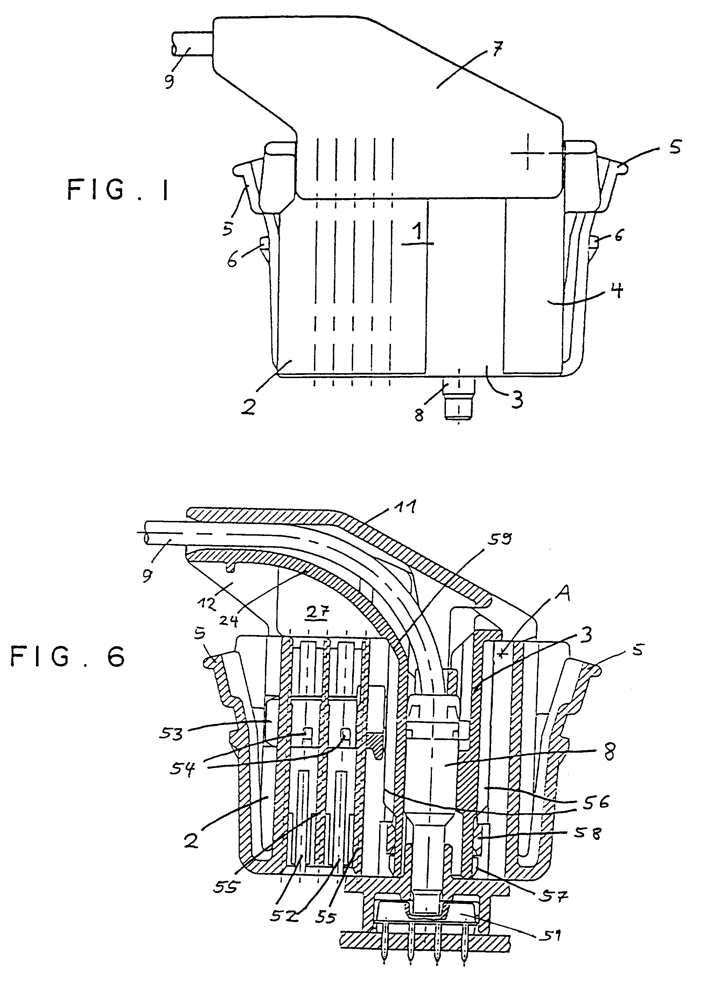

Fig. 1 is a view in side elevation of a light waveguide connector according to the invention. The body 1 is assembled from three parts, viz. an electrical connector module 2, a light waveguide module 3 and an empty model or clip 4. The module 2 and the clip 4 have on their sides catch arms 5 having projections 6 for engagement in an appropriate panel which does not form part of the invention and which is not shown. Broken vertical lines show the position of the electrical contact elements in the module 2. All three modules are covered by a cover cap 7 which is secured to the body 1 in a manner to be described in greater detail hereinafter. Part of the light waveguide plug 8 extends downwardly from the module 3. A second plug which lies behind the first plug in the viewing direction is not shown. The associated light waveguide cable 9 is taken out on the left in the top left-hand corner of the cap 7.

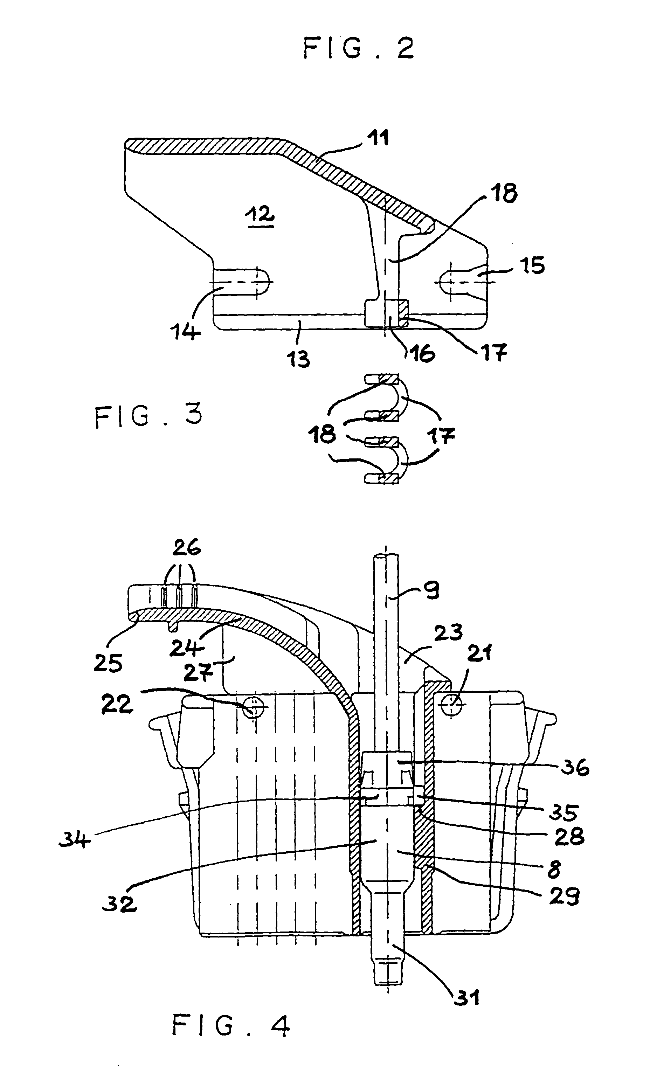

Fig. 2 is a view in cross-section through the cap 7 in a plane defined by the axes of the plug 8 and cable 9. The cover 7 comprises a partly horizontal and partly inclined roof surface 11 interconnecting two vertical side members 12, only one of which is visible in Fig. 2 and which extend around the top region of the body 1 on two sides. The insides of the members 12 are each formed with a chamfer 13 and recesses 14, 15 hereinafter referred to as the axis recess 15 (on the right in Fig. 2) and the latching recess 14 (on the left in Fig. 2). The two axis recesses together with two projections 21 (Fig. 4) on opposite sides of the body 1, define a rotational axis for the cover cap. The recesses 14, 15 are each open towards the edges of the cap 7 so that the mould tools used to form the recesses can readily be removed laterally when the cap 7 is released from its mould. To facilitate the entry of the projections 21 during assembly of the connector the recesses 15 widen funnel-fashion towards the edge of the cap 7. During the closing of the cap two further projections 22 of the body first contact the chamber 13, spread the side members 12 of the cap 7 apart from one another and finally snap into the latching recesses 14.

The construction of the pressing element 16 will become clearer from Fig. 3, which is a view in horizontal cross-section through the pressing element. The same comprises two horizontal-section U-members 17 and support arms 18. The interior of the U-member is adapted to receive a light waveguide cable and the bottom of the U-members is adapted to press the plug 8 into its seat in the assembled state. Each U-member is connected to the inclined zone of the roof surface 11 by way of two support arms 18 resiliently deformable to the right and the left in Fig. 2.

Fig. 4 is a partial section through the body 1 of the connector, the plane of the section corresponding to the plane of the section in Fig. 2. For the sake of clarity in the illustration the plug 8 in the plane of the section and the associated cable 9 are shown in side elevation. The plug 8 has, extending upwards from the bottom in Fig. 4, a free-standing pin member 31 introducible into a matching aperture in a companion connector, a cylindrical part 32 and a square-section encoding part 34 on whose periphery an encoding projection 35 can be provided at various places to prevent misconnection between light waveguide plugs for different plug chambers during the assembly of the connector. A fixing rib 29 on the wall of that zone of the plug chamber 23 which corresponds to the cylindrical plug 32 enables the plug to be movable axially without tilting. A circular shoulder 28 in the plug chamber 23 serves as the support for the corners of the square encoding part 34 and encoding projection 35 of the plug 8. A resilient element, preferably a resilient ring 36 made of silicone rubber, is disposed above the encoding part.

The top part of the light waveguide module 3 takes the form of a support element 24 formed with groove-like channels adapted to receive the light waveguide cables 9. The channels extend between the vertical chamber 23 and the substantially horizontal cable outlet 25 in a curve with a radius of curvature greater than the minimal permissible radius of curvature of the cable 9. The cross-section of the channels perpendicularly to the plane of the drawing is substantially U-shaped, as is that of the pressing element 16. Cutting edges 26 are disposed on the channel side walls near the cable outlet 25, keep the light waveguide cable immobile and prevent it from being pulled.

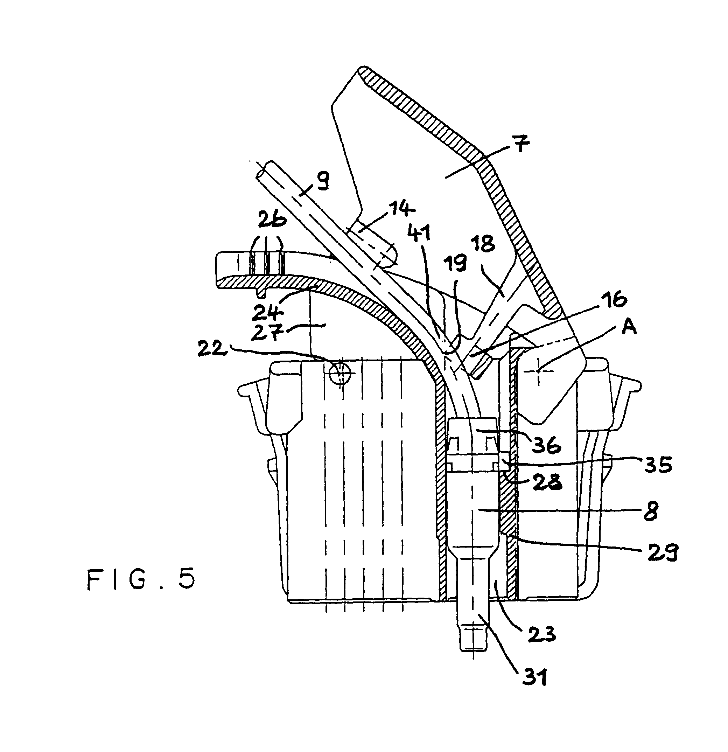

Fig. 5 is a view, in a partial section corresponding to Fig. 4, of a stage in the assembly of the connector according to the invention. The axis recesses 15 in the cap 3 have been pushed on to the pivot projections 21 on the two lateral surfaces of the body 1. In this state the cap 7 can be rotated freely around the axis A defined by the pivot until reaching the state shown in Fig. 5. In this state the bottom left corner 19 of the pressing element 16 contacts the vertical wall surface 41. The U-members of the pressing element are so dimensioned as either not to contact at all or just to wipe the cable 9 in this state. Since the pressing element is deformable perpendicularly to the direction of its support arms 18, the cap can in this state be further turned anticlockwise, the corner 19 sliding along the wall surface 41. This enables pivoting to occur and ensures that the U-members 17 do not apply any shear force to the cable 9 during assembly. The length of the pressing element is such that once the recesses 14 have engaged the projections 22 the pressing element exerts pressure on the resilient ring 36 and thus presses the plug 8 towards the abutment.

To ensure stabilisation, more particularly during the closing of the cap 7, the support element 24 has plate-like support flanks 27 which transmit to the electrical connector module a pressure applied to the cap 7, thus ensuring that the light waveguide cables can be pressed between the cutting edges 26 to the full depth. The electric cables can be led out laterally without hindrance between or adjacent the latter flanks.

The fully assembled state of the connector is shown in a complete cross-sectional view in Fig. 6. The connector is so disposed in a mounting (not shown) that the plug 8 is pressed by way of its end face on a transmitter or receiver element 51. Pressure is produced by compression of the resilient ring 36, the plug 8 having disengaged from its abutment surface in the plug chamber. In response to compression of the ring 36 the cable 9 disengages simultaneously from the support element 24 and is displaced self-supportingly transversely of its direction in the gap 29 between the element 24 and the surface 11, thus ensuring that the cable 9 is not upset and possibly kinked.

Fig. 6 shows more details concerning the modular construction of the connector. The electrical connector module 2 comprises in known manner a number of plug chambers 52 having a generally known slider 53 for secondary locking of the contacts.

The light waveguide module 3 is connected to the lateral modules 2, 4 by dovetail guides 56 which are identical on both sides of the module 3. When the body 1 is assembled from the discrete modules the lateral modules 2, 4 are slid upwards along the module 3 until catch teeth 57 thereof catch behind spring strips 58 of the other modules. The bottom end zone of the module 3, such zone carrying the teeth 57, is resilient just like the spring strips 58 so that assembly and dismantling can proceed smoothly.

The module 2 has on its back an encoding bevel 59 which merges into the support element 24 and the blank module 4 has a "blunt" corner adapted to the shape of the bevel 59 and formed with a recess near the dovetail guide, thus ensuring that the modules 2, 4 cannot be confused when the body 1 is being assembled.

Variants of the invention are possible with regard to the construction of the pressing element 16. For example, the U-members 17 can be entirely omitted so that the support arms press directly on the resilient ring 36. Also, the deformability of the pressing element 16 can be ensured not only by the use of resilient material for the support arms but also by the use of film hinges or narrowings in the support arms 18.

The depth of the recesses 14, 15 in the cap 7 can differ from what is shown in Fig. 2 and can be equal to the thickness of the side flanks 12 - i.e., they can take the form of edge incisions.

## Claims

1. A light waveguide connector having an angled cable outlet, a body (1) in which one or more light waveguide plugs (8) is or are disposed in continuous chambers (23), a support element (24) connected to the body (1) and having one or more channels adapted to receive light waveguide cables (9) angled relatively to the axis of the light waveguide plugs (8) connected to them, and a cover cap (7) for closing the channels,
wherein
the cover cap (7) is rotatable for closure around an axis (A) and has a pressing element (16) which presses on the plugs near the axis (A) in order to retain the plugs in their chamber (23), and when in the closed state the cover cap (7) clamps the light waveguide cables (9) in the channels.

2. A connector according to claim 1,
wherein
the body (1) and the cover cap (7) are formed with matching projections (21, 22) and recesses (15, 14) which define the axis (A) for the closing movement of the cover cap (7) and/or a latching connection between the body (1) and the cover cap (7).

3. A connector according to claim 2,
wherein
the recesses (14, 15) are open towards the edges of the cover cap (7).

4. A connector according to claim 2 or 3,
wherein
the recesses (15) defining the axis (A) widen funnel-fashion towards the edge of the cover cap (7).

5. A connector according to any of claims 2 to 4,
wherein
the wall (41) of the chamber (23) forms an abutment which deforms the pressing element (16) during the closing movement to ensure that the pressing element does not press laterally against the light waveguide cable (9) during the closing movement.

6. A connector according to any of claims 1 to 5,
wherein
the pressing element (16) acts by way of a resilient element (36) to press the light waveguide plug (8) on to an abutment (28).

7. A connector according to claim 6,
wherein
the resilient element (36) is a silicone rubber ring.

8. A connector according to any of claims 1 to 7,
wherein
the light waveguide cable (9) is displaceable in a gap (25) between the support element (24) and the cover cap (7).

9. A connector according to any of claims 1 to 8,
wherein
the light waveguide plug (8) has an encoding part (34) which is guided non-rotatably on the wall of the chamber (23).

10. A connector according to any of claims 1 to 9,
wherein
the body (1) is built up from a light waveguide module (3) receiving the chambers (23) of the light waveguide plugs and from one or more extension modules (2, 4) connected laterally to the light waveguide module (3), at least one of the extension modules (2) having chambers (52) for electrical contact elements.

11. A connector according to claim 2 and claim 10,
wherein
the pins (21) are disposed on an extension module (4) connected to that side of the light waveguide module (3) which is remote from the cable outlet direction, and an extension module (2) connected in the latter direction has latching projections (22) which engage in recesses (14) in the cover cap (7).

12. A connector according to claim 10 or claim 11,
wherein
the support element (24) has on its underside an encoding bevel (59) ensuring that only one extension module (2) having a recess adapted to the encoding bevel (59) can be connected to the light waveguide module (3) in the cable outlet direction.

13. A connector according to any of claims 10 to 12,
wherein
the support element (24) has at least one support flank (27) disposed on the side or intermediate walls of an extension module (4) connected to the light waveguide module (3) in the cable outlet direction.

14. A connector according to any of claims 1 to 13,
wherein
the trough-like channels in the support element (24) have near the cable outlet (25) cutting edges (26) which reduce the pull on the light waveguide cables (9).

15. A connector according to any of claims 10 to 14,
wherein
the light waveguide module (3) and the extension modules (2, 4) are interconnected and releasably latched together by dovetail guides (56), the bottom zone of the light waveguide module (3) being resiliently deformable for the opening and/or closure of the latching connection.

## Patentansprüche

1. LWL-Steckverbinder mit abgewinkeltem Kabelabgang, mit einem Körper (1), in dem ein oder mehrere LWL-Stecker (8) in durchgehenden Kammern (23) angeordnet sind, einem mit dem Körper (1) verbundenen Trägerelement (24) mit einem oder mehreren Kanälen zur Aufnahme von LWL-Kabeln (9) abgewinkelt zur Achse der mit ihnen verbundenen LWL-Stecker (8), einer Abdeckkappe (7) zum Schließen der Kanäle, wobei die Abdeckkappe (7) zum Schließen um eine Achse (A) drehbar ist und ein Druckelement (16) aufweist, das in der Nähe der Achse (A) auf die Stecker drückt, um diese in ihrer Kammer (23) festzuhalten, und daß die Abdeckkappe (7) in geschlossenem Zustand die LWL-Kabel (9) in den Kanälen einklemmt.

2. Steckverbinder nach Anspruch 1, wobei der Körper (1) und die Abdeckkappe (7) komplementäre Vorsprünge (21, 22) und Aussparungen (15, 14) aufweisen, die die Achse (A) für die Schließbewegung der Abdeckkappe (7) und/oder eine Rastverbindung zwischen dem Körper (1) und der Abdeckkappe (7) definieren.

3. Steckverbinder nach Anspruch 2, wobei die Aussparungen (14, 15) zu den Rändern der Abdeckkappe (7) hin offen sind.

4. Steckverbinder nach Anspruch 2 oder 3, wobei die die Achse (A) definierenden Aussparungen (15) zum Rand der Abdeckkappe (7) hin trichterförmig erweitert sind.

5. Steckverbinder nach einem der Ansprüche 2 bis 4, wobei die Wand (41) der Kammer (23) einen Anschlag bildet, der im Laufe der Schließbewegung das Druckelement (16) verformt, um zu verhindern, daß das Druckelement bei der Schließbewegung seitlich gegen das LWL-Kabel (9) drückt.

6. Steckverbinder nach einem der Ansprüche 1 bis 5, wobei das Druckelement (16) über ein elastisches Element (36) den LWL-Stecker (8) gegen einen Anschlag (28) drückt.

7. Steckverbinder nach Anspruch 6, wobei das elastische Element (36) ein Ring aus Siliconkautschuk ist.

8. Steckverbinder nach einem der Ansprüche 1 bis 7, wobei das LWL-Kabel (9) in einem Zwischenraum (29) zwischen dem Trägerelement (24) und der Abdeckkappe (7) verschiebbar ist.

9. Steckverbinder nach einem der Ansprüche 1 bis 8, wobei der LWL-Stecker (8) einen Kodierabschnitt (34) aufweist, der an der Wand der Kammer (23) verdrehsicher geführt ist.

10. Steckverbinder nach einem der Ansprüche 1 bis 9, wobei der Körper (1) aus einem LWL-Modul (3), das die Kammern (23) der LWL-Stecker aufnimmt, und ein oder mehreren seitlich an das LWL-Modul (3) angeschlossenen Erweiterungsmodulen (2, 4) aufgebaut ist, wobei wenigstens eines der Erweiterungsmodule (2) Kammern (52) für elektrische Kontaktelemente enthält.

11. Steckverbinder nach Anspruch 2 und Anspruch 10, wobei die Zapfen (21) an einem Erweiterungsmodul (4) angebracht sind, das an der von der Kabelabgangsrichtung abgewandten Seite des LWL-Moduls (3) angeschlossen ist, und daß ein in Kabelabgangsrichtung angeschlossenes Erweiterungsmodul (2) Rastvorsprünge (22) aufweist, die in Aussparungen (14) der Abdeckkappe (7) eingreifen.

12. Steckverbinder nach Anspruch 10 oder Anspruch 11, wobei das Trägerelement (24) an seiner Unterseite eine Kodierschräge (59) aufweist, die sicherstellt, daß nur ein Erweiterungsmodul (2) mit einer zu der Kodierschräge (59) passenden Aussparung in Kabelabgangsrichtung an das LWL-Modul (3) angeschlossen werden kann.

13. Steckverbinder nach einem der Ansprüche 10 bis 12, wobei das Trägerelement (24) wenigstens eine Stützflanke (27) aufweist, die auf den Seiten- oder Zwischenwänden eines in Kabelabgangsrichtung an das LWL-Modul (3) angeschlossenen Erweiterungsmoduls (4) aufliegt.

14. Steckverbinder nach einem der Ansprüche 1 bis 13, wobei die rinnenförmigen Kanäle im Trägerelement (24) in der Nähe des Kabelabgangs (25) Schneidkanten (26) aufweisen, die eine Zugentlastung für die LWL-Kabel (9) bilden.

15. Steckverbinder nach einem der Ansprüche 10 bis 14, wobei das LWL-Modul (3) und die Erweiterungsmodule (2, 4) durch Schwalbenschwanzführungen (56) verbunden und lösbar verrastet sind, wobei der untere Bereich des LWL-Moduls (3) zum Schließen und/oder Öffnen der Rastverbindung elastisch verformbar ist.

## Revendications

1. Connecteur pour guides d'ondes optiques comportant une sortie de câble coudée, un corps (1), dans lequel une ou plusieurs prises (8) de guides d'ondes optiques est ou sont disposées dans des chambres continues (23), un élément de support (24) connecté au corps (1) et possédant un ou plusieurs canaux aptes à recevoir des câbles de guides d'ondes optiques (9) coudés par rapport à l'axe des prises (8) de guides d'ondes optiques, connectées à ces câbles, et un capuchon de recouvrement (7) pour former les canaux, dans lequel
le capuchon de recouvrement (7) peut tourner pour la fermeture autour d'un axe (A) et possède un élément de serrage (16) qui appuie sur les prises à proximité de l'axe (A) de manière à retenir les prises dans leur chambre (23) et, lorsqu'il est à l'état fermé, le capuchon de recouvrement (7) serre les câbles de guides d'ondes optiques (9) dans les canaux.

2. Connecteur selon la revendication 1, dans lequel le corps (1) et le capuchon de recouvrement (7) présentent des parties saillantes (21, 22) et des renfoncements (15, 14) d'accouplement, qui définissent l'axe (A) pour le mouvement de fermeture du capuchon de recouvrement (7) et/ou une direction à verrouillage pour le câble (1) et le capuchon de recouvrement (7).

3. Connecteur selon la revendication 2, dans lequel les renfoncements (14, 15) s'ouvrent en direction des bords du capuchon de recouvrement (7).

4. Connecteur selon la revendication 2 ou 3, dans lequel
les renfoncements (15) définissant l'axe (A) s'élargissent en forme d'entonnoir en direction du bord du capuchon de recouvrement (7).

5. Connecteur selon l'une quelconque des revendications 2 à 4, dans lequel
la paroi (41) de la chambre (23) forme une butée qui déforme l'élément de serrage (16) pendant le mouvement de fermeture de manière à garantir que l'élément de serrage n'appuie pas latéralement sur le câble à guide d'ondes optiques (9) pendant le déplacement de fermeture.

6. Connecteur selon l'une quelconque des revendications 1 à 5, dans lequel
l'élément de serrage (16) agit au moyen d'un élément élastique (36) pour repousser la prise (8) de guide d'ondes optiques contre une butée (28).

7. Connecteur selon la revendication 6, dans lequel l'élément élastique (36) est une bague de caoutchouc silicone.

8. Connecteur selon l'une quelconque des revendications 1 à 7, dans lequel
le câble à guide d'ondes optiques (9) est déplaçable dans un interstice (25) entre l'élément de support (24) et le capuchon de recouvrement (7).

9. Connecteur selon l'une quelconque des revendications 1 à 8, dans lequel
la prise (8) à guide d'ondes optiques possède une partie de codage (34), qui est guidée sans possibilité de rotation sur la paroi de la chambre (23).

10. Connecteur selon l'une quelconque des revendications 1 à 9, dans lequel
le corps (1) est constitué par un module de guide d'ondes optiques (3) logeant les chambres (23) des prises de guides d'ondes optiques et par un ou plusieurs modules d'extension (2, 4) connectés latéralement au module à guide d'ondes optiques (3), au moins l'un des modules d'extension (2) comportant des chambres (52) pour des éléments de contact électriques.

11. Connecteur selon la revendication 2 et la revendication 10, dans lequel
les broches (21) sont disposées sur un module d'extension (4) connecté au côté du module à guides d'ondes optiques (3), qui est distant de la direction de sortie du câble, et un module d'extension (2) connecté dans la dernière direction possède des parties saillantes de verrouillage (22), qui s'engagent dans des renfoncements (14) formés dans le capuchon de recouvrement (7).

12. Connecteur selon la revendication 10 ou la revendication 11, dans lequel
l'élément de support (24) possède sur sa face inférieure un biseau de codage (59) garantissant que seul un module d'extension (2) possédant un renfoncement adapté au biseau de codage (59) peut être connecté au module de guide d'ondes (3) dans la direction de sortie du câble.

13. Connecteur selon l'une quelconque des revendications 10 à 12, dans lequel
l'élément de support (24) possède au moins un flanc de support (27) situé sur les parois latérales ou intermédiaires d'un module d'extension (4) connecté au module à guides d'ondes optiques (3) dans la direction de sortie du câble.

14. Connecteur selon l'une quelconque des revendications 1 à 13, dans lequel
les canaux en forme d'auges formés dans l'élément de support (24) possèdent, à proximité de la sortie (25) du câble, des arêtes de coupe (26) qui réduisent la traction appliquée aux câbles à guide d'ondes optiques (9).

15. Connecteur selon l'une quelconque des revendications 10 à 14, dans lequel
le module à guides d'ondes lumineuses (3) et les modules d'extension (2, 4) sont interconnectés et verrouillés entre eux d'une manière amovible par des guides en queue d'aronde (56), la partie inférieure du module à guide d'ondes optiques (3) étant déformable élastiquement pour l'ouverture et/ou la fermeture de la connexion de verrouillage.
